# EUROPÄISCHE PATENTSCHRIFT

(11) **EP 0 503 209 B1**
(45) Veröffentlichungstag und Bekanntmachung des Hinweises auf die Patenterteilung: **28.09.1994**
(21) Anmeldenummer: 91710008.3
(22) Anmeldetag: 14.03.1991
(51) Int. Cl.: E03F 5/10, G05D 7/01

(54) **Regelvorrichtung zur Veränderung des Durchflussquerschnitts der Auslauföffnung eines Ausgleichsbehälters, insbesondere eines Regenrückhaltebeckens**
Regulating device for changing the cross section of the discharge opening of an equalizing reservoir, especially a rain water storage basin
Dispositif de régulation pour modifier la section de passage d'un orifice de sortie d'un récipient d'égalisation, en particulier d'un réservoir de retenue d'eaux pluviales

(43) Veröffentlichungstag der Anmeldung: 16.09.1992
(73) Patentinhaber: Alloy-Tech Aktiengesellschaft, FL-9490 Vaduz (LI)
(72) Erfinder:
(74) Vertreter: Patentanwälte Möll und Bitterich

(56) Entgegenhaltungen:
- EP-A- 0 323 393
- FR-A- 414 372
- FR-A- 2 600 180

## Beschreibung

Die Erfindung betrifft eine Regelvorrichtung zur Veränderung des Durchflußquerschnitts der Auslauföffnung eines Ausgleichsbehälters zum Regulieren des Ablaufs von Abwasser und/oder Regenwasser, z.B. eines Regenrückhaltebeckens gemäß dem Oberbegriff des Patentanspruchs 1 vgl. EP-A-323393.

In Mischwasserkanälen werden zur Verminderung des Zulaufs zur Kläranlage bei Regen und zur Speicherung oder auch zur Klärung des Regenabflusses vor Einleitung des Regenwassers in den Vorfluter Regenentlastungen angeordnet. Zu den Regenentlastungen gehören neben einfachen Regenüberläufen vor allem Regenrückhaltebecken, Regenüberlaufbecken bzw. Kanalstauräume mit Entlastung und Regenwasserklärbecken. Regenrückhaltebecken beispielsweise speichern die großen Wassermengen, die bei starken Regenfällen plötzlich abfließen und geben sie langsam und gedrosselt wieder ab.

Ein Problem bei Bau und Betrieb solcher Regenentlastungen liegt in der Begrenzung des Abflusses, wofür verschiedene Arten von Drosselanlagen bekannt sind. Durch diese Drosselanlagen muß gewährleistet werden, daß auch bei starken Regenfällen der Wasserabfluß möglichst konstant bleibt. Drosselanlagen dieser Art sollen möglichst selbsttätig und wartungsfrei arbeiten.

In diesem Zusammenhang sind hydraulisch-mechanisch arbeitende Drosselorgane bekannt, die meist im Rückhaltebecken selbst vor der Auslauföffnung angeordnet werden. Die Bewegung des Drosselorgans, z.B. einer Drosselblende oder eines Drosselschiebers, wird dabei in Abhängigkeit von der Höhe des Flüssigkeitsspiegels durch einen Schwimmer gesteuert, der mittels übertragungselementen mit dem Drosselorgan bewegungsschlüssig verbunden ist. Das Drosselorgan verändert so zwar unmittelbar den Querschnitt der Auslauföffnung; es besteht aber das Problem, daß die Drosselanlage im Betrieb unter Wasser arbeitet, also Verschmutzungen und Korrosionserscheinungen stark ausgesetzt ist. Außerdem können etwaige Verstopfungen der Auslauföffnung nicht oder nur mit großen Anstrengungen beseitigt werden.

Bei einer bekannten Regelvorrichtung dieser Art besteht das Drosselorgan aus einer Blende, die vor die Auslauföffnung schwenkbar ist (EP-A 0 132 775). Die Drosselblende wird durch einen Schwimmer betätigt, der seine durch den Auftrieb hervorgerufene Bewegung mittels übertragungselementen auf das Drosselorgan überträgt. Bei einer anderen bekannten Regelvorrichtung wird die Bewegung eines Schwimmers über eine Steuerscheibe mit einer Steuerkurve auf die Führungsstange eines in vertikaler Richtung vor die Auslauföffnung bewegbaren Drosselschiebers übertragen (EP-A 0 108 378).

Schließlich ist auch eine Regelvorrichtung bekannt, bei der der Schwimmer in einem lediglich an seiner Unterseite offenen gasgefüllten Gehäuse angeordnet ist, in dem sich der Flüssigkeitsspiegel in Abhängigkeit von dem durch den der Höhe des Flüssigkeitsspiegels im Behälter entsprechenden Druck bestimmten Volumen des eingeschlossenen Gases einstellt (EP-A 0 343 435). Auch hier ist der Schwimmer durch ein eine Steuerkurve aufweisendes Steuerorgan mit den auf das Drosselorgan wirkenden Übertragungselementen bewegungsschlüssig verbunden. Als Drosselorgan ist bei dieser Regelvorrichtung ein in vertikaler Richtung in einer Führung bewegbarer Schieber vorgesehen.

Bei dieser Regelvorrichtung ist auch eine Möglichkeit für eine selbsttätige Beseitigung von Verstopfungen der Auslauföffnung bei teilweise geschlossenem Drosselschieber aufgezeigt. Hierzu weist der Drosselschieber eine in vertikaler Richtung verlaufende Durchgangsöffnung auf, die am unteren Ende durch eine gelenkig am Schieber befestigte, durch den Flüssigkeitsstrom bewegbare Verschlußklappe verschließbar ist. Wird die - teilweise durch den Drosselschieber verschlossene - Auslauföffnung durch Fremdkörper verstopft, dann reicht der dynamische Auftrieb des Flüssigkeitsstromes nicht mehr aus, um die Verschlußklappe geöffnet zu halten. Öffnet sie sich, dann findet über die Durchgangsöffnung ein Druckausgleich statt, der zu einer kurzzeitigen Druckentlastung der Oberseite des Schiebers führt. Infolge der plötzlich auftretenden Druckdifferenz wird der Drosselschieber nach oben gedrückt und so die Auslauföffnung vollständig freigegeben, so daß der Fremdkörper ausgetragen wird. Ist der Fremdkörper beseitigt, so nimmt der Drosselschieber aufgrund seines Gewichtes die vorgegebene Stellung wieder ein. Abgesehen davon, daß diese bekannte Vorrichtung nur bei einem vertikal bewegbaren Drosselschieber anwendbar ist, ist ihr Funktionieren von einer Reihe von Bewegungsvorgängen abhängig, die aufgrund der Schwerkraft selbsttätig ablaufen müssen und nicht zwangsweise gesteuert werden können.

Durch Verwendung eines Schwimmers lassen sich zwar Regelvorgänge in Abhängigkeit von einem veränderlichen Wasserspiegel relativ leicht ausführen; Schwimmer haben aber den Nachteil, daß der Auftrieb auch bei steigendem Wasserspiegel konstant bleibt, daß also bei steigenden Druckverhältnissen nicht mehr Antriebskraft zur Verfügung gestellt werden kann. Außerdem haben die bekannten Regelvorrichtungen, abgesehen von einem relativ großen Platzbedarf für Schwimmer, Steuerorgan und Übertragungselemente den Nachteil, daß der Abfluß im Betrieb, also unter Wasser nicht beeinflußt werden kann. Auch im ungestörten Betriebszustand kann weder das Drosselorgan von außen geöffnet oder geschlossen, noch kann die Abflußmenge verändert werden. Eine Veränderung der Abflußcharakteristik gelingt nur durch Auswechslung der Steuerkurve; dies ist aber nur bei leerem Behälter möglich. Ein weiterer Nachteil liegt darin, daß die Gefahr von Verstopfungen nicht erkannt wird und daß Verstopfungen von außen nur unter großen Schwierigkeiten beseitigt werden können.

Neben dem Einsatz von Schwimmern zur Steuerung einer Regelvorrichtung für den Abfluß einer Flüssigkeit aus einem Behälter ist es auch schon bekannt geworden, die Druckdifferenz zwischen dem hydraulischen Druck in einem dem Ablaufkanal zugeordneten Druckraum und demjenigen in einem Druckraum auszunutzen, der mit dem Ablaufkanal über einen Saugkanal verbunden ist, in dem infolge der Strömungsgeschwindigkeit der ablaufenden Flüssigkeit sich somit ein gegenüber dem im Ablaufkanal herrschenden Druck reduzierter Druck einstellt (EP 0 323 393 A2). Zwischen beiden Druckräumen ist ein um eine horizontale Achse schwenkbarer Druckaufnehmer angeordnet, welcher entsprechend der beim Ablauf auftretenden Druckdifferenz Schwenkbewegungen ausführt, die über ein Gestänge auf ein den Ablaufkanal freigebendes oder teilweise verschließendes Drosselorgan überträgt. Eventuelle Verstopfungen der Ablauföffnung können dadurch selbsttätig beseitigt werden, daß infolge einer Verstopfung sich die Strömungsgeschwindigkeit im Ablaufkanal verringert, was zu einer Reduzierung der Abblendung des Ablaufkanals führt, so daß der Schmutz weggeschwemmt werden soll.

Da hier nur die Druckdifferenz zwischen dem in dem Behälter herrschenden hydraulischen Druck und dem infolge Erhöhung der Austrittsgeschwindigkeit der Flüssigkeit aus dem Ablaufkanal reduzierten Druck im Saugkanal ausgenützt wird, reicht die hieraus resultierende Kraft nicht für eine zuverlässige Steuerung des Drosselorgans aus.

Vor diesem Hintergrund liegt der Erfindung die Aufgabe zugrunde, bei einer Regelvorrichtung der eingangs angegebenen Art eine Möglichkeit zu schaffen, um das Drosselorgan sicherer und zuverlässiger betätigen und vor allem auch im Betrieb im Sinne einer Veränderung der Abflußmenge beeinflussen zu können. Weiterhin sollen nach Möglichkeit auch Verstopfungen erkannt und ebenfalls im Betrieb selbsttätig beseitigt werden.

Diese Aufgabe wird gemäß der Erfindung durch die im kennzeichnenden Teil des Patentanspruchs 1 angegebenen Merkmale gelöst.

Vorteilhafte Weiterbildungen ergeben sich aus den Unteransprüchen.

Der wesentliche Vorteil der erfindungsgemäßen Regelvorrichtung besteht darin, daß zur Betätigung des Drosselorgans nicht der durch einen Schwimmer erzeugte Auftrieb, noch eine Druckdifferenz, sondern der hydrostatische Wasserdruck unmittelbar verwendet wird. Dies hat zur Folge, daß die Antriebskraft zur Betätigung des Drosselorgans mit steigendem Flüssigkeitsspiegel im Behälter linear anwächst. Nach der Erfindung gelingt dies durch eine vertikale Membran, auf die der hydrostatische Druck der Regenwasserfüllung des Behälters unmittelbar wirkt und die in Abhängigkeit von diesem Druck parallel verschoben wird. Diese Horizontalverschiebung wirkt auf ein zwei- oder mehrarmiges Scherengetriebe, das die Horizontalbewegung in eine Vertikalbewegung umsetzt, die ihrerseits unmittelbar in eine Vertikalbewegung des Drosselorgans, vorzugsweise eines vertikal bewegbaren Drosselschiebers umgesetzt wird. Da sowohl die vom Betätigungsorgan, als auch vom Steuerorgan und den übertragungselementen zurückzulegenden Wege kurz sind, ergibt sich so eine sehr kompakte Bauart der erfindungsgemäßen Regelvorrichtung.

Um den Drosselschieber in geöffneter Stellung zu halten, kann er gewichtsausgeglichen aufgehängt sein. Besonders zweckmäßig ist es aber, den Drosselschieber durch ein Federelement so zu halten, daß die Betätigung des Drosselschiebers gegen die Wirkung der Federkraft erfolgen muß. Wenn das Federelement vorspannbar gelagert ist, dann gelingt über eine entsprechende Vorspannung der Feder auch eine Beeinflussung der Bewegung des Drosselschiebers, also eine Steuerung der Abflußcharakteristik ähnlich wie mit einer Steuerkurve.

Die Erfindung wird nachstehend anhand der Zeichnung näher erläutert. Es zeigt
- Fig. 1: einen Vertikalschnitt durch eine Ausführungsform der erfindungsgemäßen Regelvorrichtung im Ruhezustand bei Trockenwetterabfluß und
- Fig. 2: in ungestörtem Betriebszustand bei Regenabfluß,
- Fig. 3: einen Vertikalschnitt durch eine andere Ausführungsform der Regelvorrichtung mit einer Vorrichtung zur selbsttätigen Beseitigung von Verstopfungen ebenfalls im Ruhezustand bei Trockenwetterabfluß und
- Fig. 4: in durch eine Verstopfung gestörtem Betriebszustand sowie die
- Fig. 5 bis 7: die Vorrichtung zur Beseitigung von Verstopfungen in größerem Maßstab in drei Betriebsphasen.

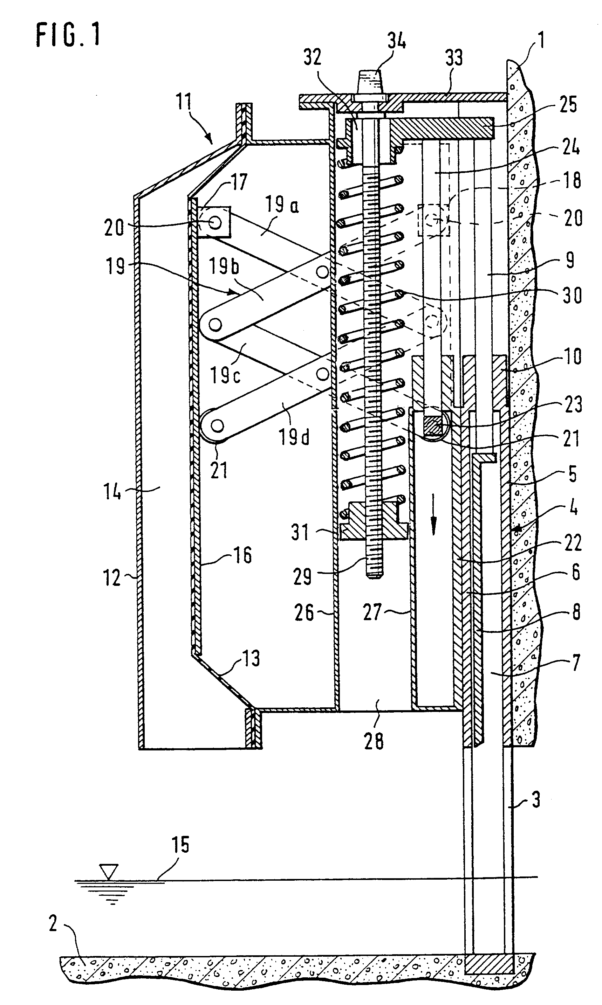

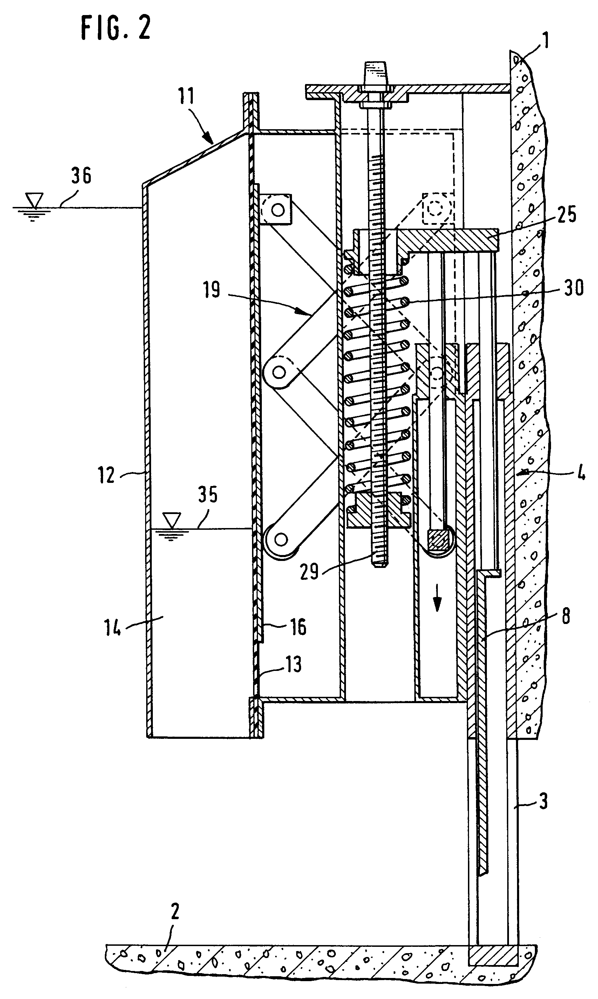

In den Fig. 1 und 2 sind von einem Regenrückhaltebecken, in das ablaufseitig die erfindungsgemäße Regelvorrichtung eingebaut ist, nur die Beckenstirnwand 1 und der Beckenboden 2 mit dem zur Auslauföffnung 3 führenden Gerinne angedeutet.

Die Regelvorrichtung umfaßt zunächst ein Schiebergehäuse 4 aus einer an der Beckenstirnwand 1 anliegenden Rückwand 5 und einer Vorderwand 6, die einen Schieberschacht 7 bilden, in dem ein Drosselschieber 8 in vertikaler Richtung bewegbar ist. In Anbetracht der Verschmutzungsgefahr und des hydrostatischen Wasserdrucks unterliegt der Schieber 8 bei seiner Vertikalbewegung großen Reibungskräften, so daß auf eine möglichst leichtgängige Führung geachtet werden muß. Der Schieber 8 ist am oberen Ende an einer Schieberstange 9 gehalten, die in einer Führung 10 geführt ist.

Während das Schiebergehäuse 4 fest an der Beckenstirnwand 1 befestigt wird, sind die übrigen Teile der Regelvorrichtung in einem in seiner Gesamtheit mit 11 bezeichneten Gehäuse untergebracht, das auf das Schiebergehäuse 4 gesteckt bzw. geschoben und an diesem lösbar befestigt werden kann.

An der Stirnseite des Gehäuses 11 ist zunächst durch eine vordere Gehäusewand 12 und eine das Gehäuse in vertikaler Richtung unterteilende Membran 13 ein nach unten hin offener Druckraum 14 gebildet. Bei steigendem Flüssigkeitsspiegel - in Fig. 1 ist lediglich der Wasserspiegel 15 des Trockenwetterabflusses angedeutet - steigt das Wasser in dem Druckraum 14 auf und komprimiert die darüber befindliche Luft entsprechend dem steigenden hydrostatischen Wasserdruck.

Die Membran 13 ist in ihrem mittleren Bereich durch eine Druckplatte 16, z.B. eine Stahlplatte, ausgesteift. Im Inneren des Gehäuses 11 ist ein Scherengetriebe 19 aus zwei Paaren von Scherenarmen 19a, b und 19c, d angeordnet. Die Enden der oberen Scherenarme 19a, 19b sind über Gelenkzapfen 20 einerseits an einer an der Druckplatte 16 befestigten Lagerkonsole 17 und andererseits an einer am Gehäuse 11 gelagerten Lagerkonsole 18 angelenkt; die Enden der unteren Scherenarme 19c, 19d sind mittels Rollen 21 wiederum gegen die Druckplatte 16 einerseits bzw. gegen eine am Schiebergehäuse 4 anliegende rückwärtige Gehäusewand 22 andererseits abgestützt. Eine infolge zunehmenden hydrostatischen Wasserdrucks eintretende Horizontalverschiebung der Membran 13 mit der Druckplatte 16 führt zu einer Zusammendrückung des Scherengetriebes 19 mit einer nach unten gerichteten Vertikalbewegung der Enden der unteren Scherenarme 19c, 19d. Diese Vertikalbewegung wird am Ende des Scherenarms 19c durch einen gelenkig angeschlossenen Querbolzen 23, der zwei parallel zueinander und im Abstand voneinander angeordnete Scherengetriebe 19 verbindet, abgenommen und über eine zwischen den Scherengetrieben 19 liegende Betätigungsstange 24 auf ein Joch 25 übertragen, an dem auch die Schieberstange 9 befestigt ist. Diese Vertikalbewegung des Scherengetriebes 19 führt so unmittelbar zu einer Schließbewegung des Schiebers 8.

In einem durch zwei Zwischenwände 26 und 27 sowie entsprechende Stirnwände abgeteilten Schacht 28 ist eine von einer vertikalen Spindel 29 axial durchsetzte Druckfeder 30 angeordnet. Die Druckfeder 30 stützt sich am unteren Ende der Spindel 29 gegen eine Spindelmutter 31 ab; auf ihrem oberen Ende liegt das Joch 25 auf, das eine Durchbrechung 32 für die Spindel 29 aufweist. Die Spindel 29 ist an ihrem oberen Ende drehbar gegenüber einer Abdeckplatte 33 gelagert; sie weist hier einen Vierkant 34 als Spindelantrieb auf.

Diese Anordnung hat zur Folge, daß der Drosselschieber 8 in vertikaler Richtung gegen die Federkraft der Druckfeder 30 gehalten wird; eine durch den hydrostatischen Flüssigkeitsdruck auf die Membran 13 ausgeübte Horizontalkraft führt zu einer Zusammendrückung des Scherengetriebes 19 und - gegen eine weitere Zusammendrückung der Feder 30 - zu einer Abwärtsbewegung des Drosselschiebers 8. Über die von außen betätigbare Spindel 29 gelingt eine Vorspannung der Druckfeder 30 und somit eine Beeinflussung der Vertikalbewegung des Schiebers und über diese der Abflußcharakteristik der Regelvorrichtung.

In der dargestellten Ausführungsform besitzt der Scherentrieb ein übersetzungsverhältnis von etwa 1 : 2, d.h. eine Horizontalverschiebung um eine Einheit bewirkt eine Vertikalverschiebung um zwei Einheiten; dieses Verhältnis könnte aber auch anders gewählt sein. Die Vorrichtung hat zwei Grenzzustände. Ist die Feder 30 durch Betätigung der Spindel 29 vollständig entspannt, dann genügt das Eigengewicht des Drosselschiebers 8, um die Feder 30 zusammenzudrücken; der Drosselschieber 8 bleibt so geschlossen. Wird die Feder 30 durch die Spindel 29 vollständig zusammengedrückt, ist also keine weitere Zusammendrückung mehr möglich, bleibt der Schieber 8 offen. In diesem Rahmen können durch Betätigung der Spindel 29 nicht nur die Abflußcharakteristik der Regelvorrichtung, auch im Betriebszustand verändert, sondern auch festgestellte Verstopfungen manuell beseitigt werden.

Während Fig. 1 die erfindungsgemäße Regelvorrichtung bei Trockenwetterabfluß zeigt, also bei geöffnetem Drosselschieber 8, zeigt Fig. 2 einen ungestörten Betriebszustand bei Regenabfluß, also bei teilweise geschlossenem Drosselschieber 8. Gegenüber der Fig. 1 sind hier auch die Horizontalverschiebung der Membran 13 mit der Druckplatte 16 und die daraus folgende Absenkbewegung des Joches 25 unter Zusammendrückung der Druckfeder 30 zu erkennen.

Die Anordnung der Membran 13 und der Druckplatte 16 in einem lediglich an seiner Unterseite offenen gasgefüllten Druckraum 14 hat den Vorteil einer Vergleichmäßigung des auf die Membran 13 wirkenden horizontalen Druckes. Während der hydrostatische Wasserdruck unmittelbar von der Stauhöhe abhängig ist, wirkt das über dem Wasserspiegel 35 im Druckraum 14 komprimierte Gas mit gleichmäßigem Druck auf die Membran. Der Wasserspiegel 36 im Behälter selbst ist hier nur schematisch angedeutet; er liegt im Betriebszustand wesentlich höher.

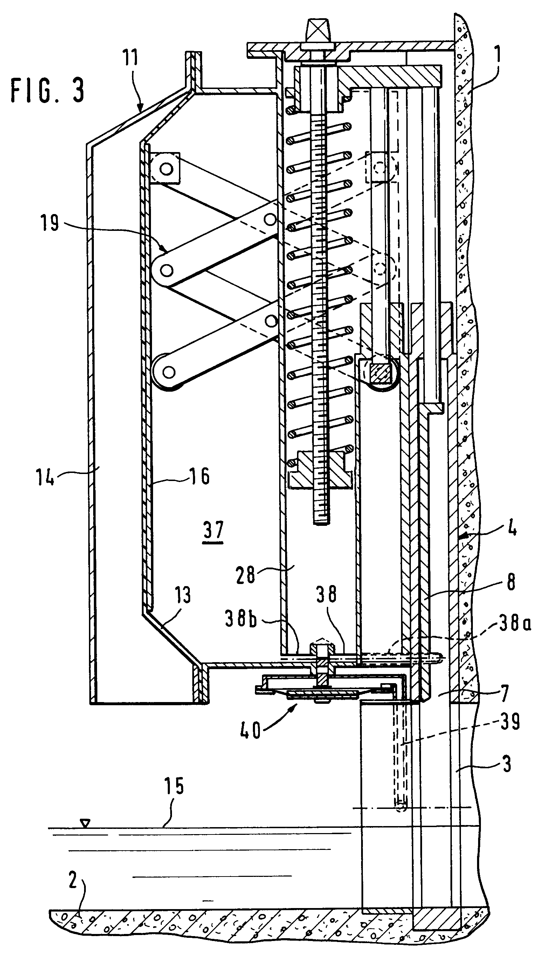

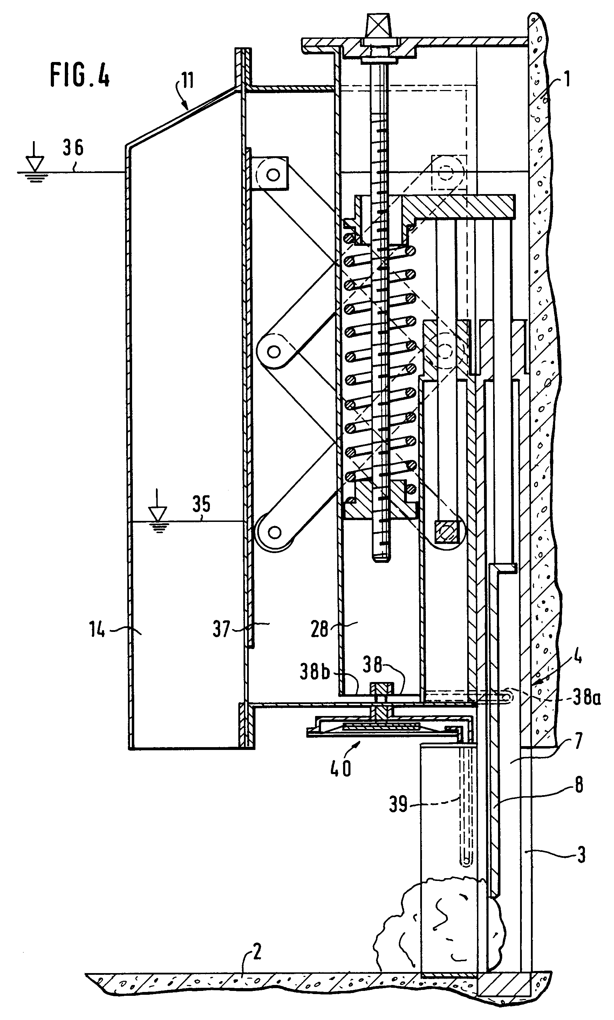

In den Fig. 3 und 4 ist eine erfindungsgemäß ausgebildete Regelvorrichtung gezeigt, der noch eine Vorrichtung zur selbsttätigen Beseitigung von Verstopfungen zugeordnet ist. Ähnlich wie Fig. 1, die die Regelvorrichtung im Zustand des Trockenwetterabflusses zeigt, gibt auch Fig. 3 diesen Zustand wieder. Zusätzlich ist hier unterhalb des Spindelschachtes 28 in eine aus einer an die Membran 13 anschließenden Kammer 37 in den Schieberschacht 7 führende Leitung 38 ein Steuerventil 40 eingesetzt, aus dem eine Steuerleitung 39 zur Auslauföffnung 3 führt.

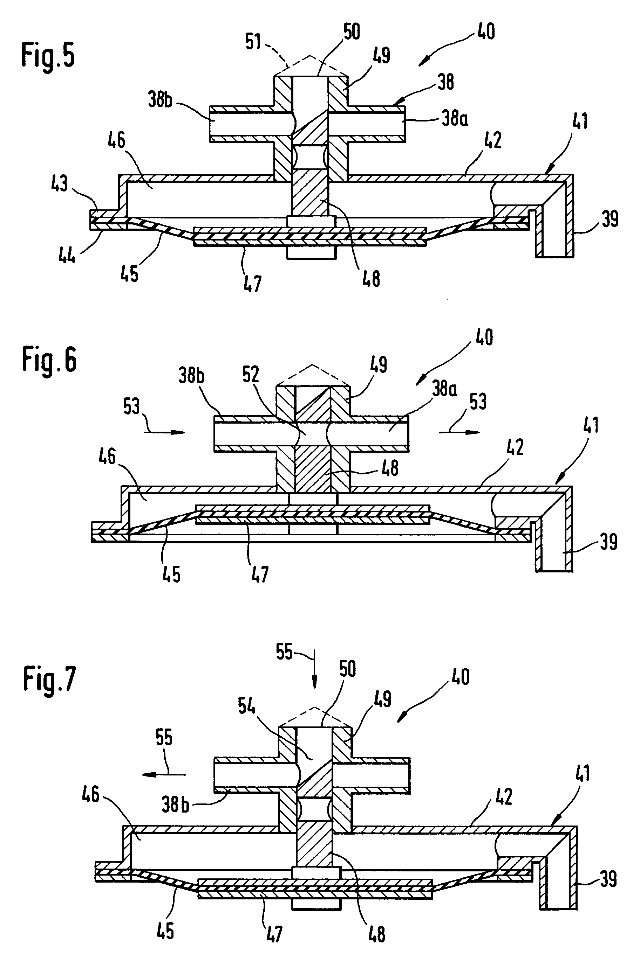

Das Steuerventil 40 ist in den Fig. 5 bis 7 in einigen unterschiedlichen Betriebszuständen in größerem Maßstab dargestellt. Gemäß Fig. 5 umfaßt das Steuerventil 40 im wesentlichen eine Druckdose 41 aus einem einseitig offenen Gehäuse 42 mit einem einen Flansch 43 aufweisenden Rand. An dem Flansch 43 ist mittels eines Flanschringes 44 eine Membran 45 aus elastisch verformbarem Material, wie Gummi, Kunststoff oder dergleichen befestigt, welche das Gehäuse 42 an der offenen Seite abschließt und einen Druckraum 46 bildet. Die Membran 45 ist in ihrem zentralen Bereich durch eine zweiteilige Bodenplatte 47 ausgesteift. An der Bodenplatte 47 ist ein Ventilstößel 48 befestigt, der in einem auf das Gehäuse 42 aufgesetzten Ventilgehäuse 49 bewegbar ist. Das Ventilgehäuse 49 weist nach oben hin eine Eintrittsöffnung 50 auf, durch die - wenn das Steuerventil 40 von Wasser umspült ist - Abwasser eintreten kann; die Eintrittsöffnung 50 ist deshalb durch ein Sieb 51 abgedeckt. Durch das Ventilgehäuse 49 hindurch verläuft die Leitung 38, die mit einem - in der Darstellung der Fig. 5 rechten - Ast 38a über den Schieberschacht 7 an die atmosphärische Außenluft angeschlossen ist, während der - in der Darstellung der Fig. 5 linke - Ast 38b zu der Kammer 37 führt, die durch die Membran 13 und die Druckplatte 16 von dem Druckraum 14 abgetrennt ist.

In dem in den Fig. 3 und 5 dargestellten Zustand "Trockenwetterabfluß" wird die Membran 45 durch das Eigengewicht der Bodenplatte 47 und des Ventilstößels 48 in der unteren Endlage gehalten. In diesem Zustand herrschen sowohl im Druckraum 46, als auch in der Kammer 37 atmosphärischer Luftdruck.

Steigt bei einem Regenereignis der Wasserspiegel im Behälter an (Fig. 4 und 6), dann wirkt auf die Membran 45 von außen her der hydrostatische Wasserdruck, von innen, also von dem Druckraum 46 her, aber nur der durch die Steuerleitung 39 übertragene, um den dynamischen Anteil verminderte Druck. Dadurch wird die Membran 45 nach oben gedrückt; ein Anschlag ist dabei durch eine Schulter 51 am Gehäuse 42 im Bereich des Ventilgehäuses 49 gegeben. In diesem Zustand fluchtet eine Bohrung 52 im Ventilstößel 48 mit der Leitung 39, so daß die Kammer 37 zur atmosphärischen Luftseite hin entlüftet werden kann (Pfeile 53); dies ist notwendig, damit die Membran 13 die zur Betätigung des Scherengetriebes 19 erforderliche Horizontalbewegung ausführen kann.

Tritt nun im Bereich der Auslauföffnung 3 eine Verstopfung auf (Fig. 4), so verlangsamt sich die Fließgeschwindigkeit des ausströmenden Wasser, unter Umständen bis zum völligen Stillstand hin; dadurch vermindert sich der dynamische Druckanteil, unter Umständen bis zum völligen Verschwinden. Damit tritt ein Druckausgleich zwischen dem im Druckraum 46 innerhalb der Druckdose 41 herrschenden Druck und dem außen herrschenden hydrostatischen Wasserdruck ein mit der Folge, daß die Membran 45 und damit der Ventilstößel 48 aufgrund ihres Eigengewichts wieder in die untere Endlage geraten (Fig. 7). Dadurch wird über das abgeschrägte obere Ende 54 des Ventilstößels 48 eine Verbindung zwischen der Eintrittsöffnung 50 und der zur Kammer 37 führenden Leitung 38b geschaffen mit der Folge, daß Wasser aus dem Spindelschacht 28 in die Kammer 37 eintreten kann. Da die Kammer 37 im übrigen geschlossen ist, baut sich in der Kammer 37 der gleiche hydrostatische Wasserdruck auf wie im Druckraum 14; dadurch wird der auf das Scherengetriebe 19 ausgeübte horizontale Druck aufgehoben, so daß die Druckfeder 30 den Drosselschieber 8 nach oben zieht und somit die Auslauföffnung 3 vollständig freigibt. Damit kann das die Verstopfung bewirkende Material ausgetragen werden und die Flüssigkeitsströmung kommt wieder in Gang. Mit der Flüssigkeitsströmung entsteht dann auch wieder ein Druckunterschied zwischen dem von außen auf die Membran 45 einwirkenden hydrostatischen Druck und dem Druck innerhalb der Druckdose 41, der die Leitung 38 wieder freigibt, so daß das in der Kammer 37 befindliche Wasser wieder ausgetragen werden kann. In gleichem Maße kann der hydrostatische Wasserdruck in der Druckkammer 14 wieder auf die Membran 13 wirken, wodurch der Drosselschieber 8 wieder in seine vorbestimmte Lage zurückkehrt.

Das Steuerventil 40 ist, wenngleich es hier am Beispiel einer konkreten Ausführungsform einer Regelvorrichtung beschrieben wurde, dennoch nicht auf diese Anwendung beschränkt. Ein in dieser Weise ausgebildetes Steuerventil könnte in gleicher Weise etwa auch zum Fluten oder Entleeren eines Schwimmers verwendet werden. Diese Anordnung ist jedoch nicht Bestandteil der hier beanspruchten Erfindung.

## Patentansprüche

1. Regelvorrichtung zur Veränderung des Durchflußquerschnitts der Auslauföffnung eines Ausgleichsbehälters zum Regulieren des Ablaufs von Abwasser und/oder Regenwasser, z.B. eines Regenrückhaltebeckens, in Abhängigkeit von der Höhe des Wasserspiegels mit einem über die Ablaufleitung führbaren Drosselorgan (8), das unter Zwischenschaltung eines Steuerorgans mittels übertragungselementen mit einem durch den der Höhe des Flüssigkeitsspiegels im Behälter entsprechenden Druck beaufschlagbaren Betätigungsorgan bewegungsschlüssig verbunden ist, dadurch gekennzeichnet, daß als Betätigungsorgan eine im wesentlichen vertikale, in horizontaler Richtung mit Druck beaufschlagbare und entsprechend diesem Druck parallel verschiebbare Fläche (16,13) vorgesehen ist, der als Steuerorgan ein Scherengetriebe (19) zur Umsetzung der Horizontalbewegung in eine Vertikalbewegung zugeordnet ist.

2. Regelvorrichtung nach Anspruch 1, dadurch gekennzeichnet, daß die Fläche an einer durch eine Druckplatte (16) versteiften Membran (13) aus elastisch verformbarem Material gebildet ist.

3. Regelvorrichtung nach Anspruch 1 oder 2, dadurch gekennzeichnet, daß das Betätigungsorgan in einem lediglich an seiner Unterseite offenen Gehäuse (11) angeordnet ist, in dem sich der Flüssigkeitsspiegel in Abhängigkeit von dem durch den der Höhe des Flüssigkeitsspiegels im Behälter entsprechenden Druck bestimmten Volumen des eingeschlossenen Gases einstellt.

4. Regelvorrichtung nach einem der Ansprüche 1 bis 3, dadurch gekennzeichnet, daß als Drosselorgan ein in einer vertikalen Führung bewegbarer Drosselschieber (8) vorgesehen ist, und daß die dem Scherengetriebe (19) erteilte Horizontalverschiebung als Vertikalbewegung unmittelbar auf den Drosselschieber (8) übertragen wird.

5. Regelvorrichtung nach einem der Ansprüche 1 bis 4, dadurch gekennzeichnet, daß der Drosselschieber (8) gewichtsausgeglichen gehalten ist.

6. Regelvorrichtung nach einem der Ansprüche 1 bis 5, dadurch gekennzeichnet, daß der Drosselschieber (8) unter Zwischenschaltung eines Federelementes (30) gehalten ist.

7. Regelvorrichtung nach Anspruch 6, dadurch gekennzeichnet, daß das Federelement (30) vorspannbar ist.

8. Regelvorrichtung nach Anspruch 6 oder 7, dadurch gekennzeichnet, daß als Federelement (30) eine Druckfeder vorgesehen ist, die von einer am Gehäuse (11) gelagerten Spindel (29) durchsetzt ist, an deren unterem Ende eine gegen Verdrehen gesicherte Spindelmutter (31) als Abstützung für die Feder angeordnet ist, gegen die sich am oberen Ende ein Joch (25) abstützt, an dem der Drosselschieber (8) über eine Schieberstange (9) aufgehängt ist.

9. Regelvorrichtung nach Anspruch 8, dadurch gekennzeichnet, daß an dem Joch (25) eine Betätigungsstange (24) befestigt ist, die anderenends mit dem Abtriebsende des Scherengetriebes (19) verbunden ist.

10. Regelvorrichtung nach einem der Ansprüche 1 bis 9, dadurch gekennzeichnet, daß zur selbsttätigen Beeinflussung des Drosselorgans eine Steuereinrichtung mit folgenden Merkmalen vorgesehen ist
- eine mindestens einen Druckraum (46) umschließende Druckdose (41) mit einer beidseits durch Wasserdruck beaufschlagbaren Membran (45), die an einer Seite durch einen zumindest annähernd dem hydrostatischen Wasserdruck im Bereich geringer Fließgeschwindigkeit entsprechenden Wasserdruck beaufschlagbar ist,
- eine in einen Druckraum (46) mündende Steuerleitung (39) mit einer im Bereich höherer Fließgeschwindigkeit z.B. in der Auslauföffnung (3) liegenden Öffnung und durch
- ein an die Druckdose (41) angeschlossenes Ventilgehäuse (49), in dem ein durch die Membran (45) betätigbarer Ventilstößel (48) zwischen einer eine Entlüftungsleitung (38) einer Kammer (37) freigebenden und einer den Eintritt von Flüssigkeit in die Kammer (37) ermöglichenden Stellung bewegbar ist, wobei die in die Kammer (37) eintretende Flüssigkeit mittelbar oder unmittelbar auf das Drosselorgan im Sinne einer Freigabe der Auslauföffnung (3) einwirkt.

11. Regelvorrichtung nach Anspruch 10, dadurch gekennzeichnet, daß die Druckdose (41) aus einem flachen Gehäuse (42) besteht, das an seiner Unterseite durch die Membran (45) abgeschlossen ist und das an seiner Oberseite das Ventilgehäuse (49) trägt.

12. Regelvorrichtung nach Anspruch 10 oder 11, dadurch gekennzeichnet, daß der Ventilstößel (48) zentrisch an einer zweiteiligen, die Membran (45) zwischen sich einschließenden Bodenplatte (47) befestigt ist.

13. Regelvorrichtung nach einem der Ansprüche 10 bis 12, dadurch gekennzeichnet, daß das Ventilgehäuse (49) von der Entlüftungsleitung (38) in Querrichtung durchsetzt und am oberen Ende mit einer Eintrittsöffnung (50) für die Flüssigkeit versehen ist und daß der Ventilstößel (48) eine querverlaufende Bohrung (52) aufweist, die in einer Endstellung mit der Entlüftungsleitung (38) in fluchtende Verbindung bringbar ist und in der anderen Endstellung den Eintritt von Flüssigkeit in die Kammer (37) ermöglicht.

## Claims

1. A regulating device for varying the discharge cross-section of the outlet opening of an equalizing tank for regulating the outflow of waste water and/or rain water, for example of a rain retention reservoir, as a function of the height of the water level, having a throttling member (8) which can be guided across the outflow duct and which with the interposition of a control member and by means of transmission elements is connected so as to be interlocked for movement with an actuating member which can be acted upon by the pressure corresponding to the height of the water level in the tank, characterised in that a substantially vertical surface (16, 13) forms the actuating member, on which surface pressure can act horizontally and effect parallel displacement in accordance with the pressure, a scissors drive (19) being associated with said surface as the control member for converting the horizontal movement into a vertical movement.

2. A regulating device according to Claim 1, characterised in that the surface is formed on a diaphragm (13) of elastically deformable material reinforced by a pressure plate (16).

3. A regulating device according to Claim 1 or 2, characterised in that the actuating member is disposed in a housing (11) which is open only on its underside and in which the liquid level is set as a function of the volume of the enclosed gas determined by the pressure corresponding to the height of the liquid level in the tank.

4. A regulating device according to any one of Claims 1 to 3, characterised in that the throttling member comprises a throttle slide (8) movable in a vertical guide, and in that the horizontal displacement imparted to the scissors drive (19) is transmitted as a vertical movement directly to the throttle slide (8).

5. A regulating device according to any one of Claims 1 to 4, characterised in that the throttle slide (8) is retained in a weight-balanced manner.

6. A regulating device according to any one of Claims 1 to 5, characterised in that the throttle slide (8) is retained by the interposition of a spring element (30).

7. A regulating device according to Claim 6, characterised in that the spring element (30) can be pretensioned.

8. A regulating device according to Claim 6 or 7, characterised in that the spring element (30) is a compression spring through which passes a spindle (29) which is mounted on the housing (11) and at its bottom end has a spindle nut (31) secured against rotation and which serves as a support for the spring, and its upper end carries a yoke (25) from which the throttle slide (8) is suspended via a slide rod (9).

9. A regulating device according to Claim 8, characterised in that an actuating rod (24) is secured to the yoke (25) and, at its other end, is connected to the driven end of the scissors drive (19).

10. A regulating device according to any one of Claims 1 to 9, characterised in that for the automatic control of the throttle member there is provided a control means having the following features:
- a pressure capsule (41) enclosing at least one pressure chamber (46) and having a diaphragm (45) which can be acted upon on both sides by water pressure and which on one side can be acted upon by a water pressure corresponding at least approximately to the hydrostatic water pressure in the region of low flow rate;
- a control duct (39) discharging into a pressure chamber (46) and having an opening situated in the region of higher flow rate, for example in the outlet opening (3), and by
- a valve housing (49) which is attached to the pressure capsule (41) and in which a valve stem (48), which can be actuated by the diaphragm (45), is movable between a position freeing a vent duct (38) of chamber (37) and a position enabling liquid to be admitted into the chamber (37), wherein the liquid entering the chamber (37) acts indirectly or directly on the throttle member for the purpose of freeing the outlet opening (3).

11. A regulating device according to Claim 10, characterised in that the pressure capsule (41) comprises a flat housing (42) which on its underside is closed by the diaphragm (45) and which on its upper side carries the valve housing (49).

12. A regulating device according to Claim 10 or 11, characterised in that the valve stem (48) is mounted centrally on a two-part base plate (47) enclosing the diaphragm (45) between it.

13. A regulating device according to any one of Claims 10 to 12, characterised in that the valve housing (49) is traversed by the vent duct (38) in a transverse direction and at its upper end is provided with an inlet opening (50) for the liquid, and in that the valve stem (48) has a transversely extending bore (52) which in one extreme position can be brought into aligned communication with the vent duct (38) and in the other extreme position allows the entry of liquid into the chamber (37).

## Revendications

1. Dispositif de régulation, pour produire une variation de la section transversale d'écoulement de l'ouverture d'évacuation d'un récipient d'équilibrage destiné à la régulation de l'écoulement d'eaux usées et/ou d'eaux de pluie, par exemple un bassin de retenue d'eaux de pluies, en fonction de la hauteur du niveau d'eau, à l'aide d'un organe d'étranglement (8) pouvant être guidé sur la conduite d'évacuation et relié cinématiquement, avec interposition d'un organe de commande, au moyen d'éléments de transmission, à un organe d'actionnement pouvant être sollicité par la pression correspondant à la hauteur du niveau de liquide dans le récipient, caractérisé en ce qu'est prévu comme organe d'actionnement une surface (16, 13), sensiblement verticale, susceptible d'être sollicitée en direction horizontale par une pression et d'être déplacée parallèlement, de manière correspondant à cette pression, surface à laquelle est associée, à titre d'organe de commande, une transmission à ciseaux (19), destinée à convertir le déplacement horizontal en un déplacement vertical.

2. Dispositif de régulation selon la revendication 1, caractérisé en ce que la surface est constituée d'une membrane (13) en matériau déformable élastiquement, rigidifiée à l'aide d'une plaque de pression (16).

3. Dispositif de régulation selon la revendication 1 ou 2, caractérisé en ce que l'organe d'actionnement est disposé dans un carter (11) ouvert seulement en face inférieure, dans lequel le niveau de liquide s'établit en fonction du volume de gaz enfermé, déterminé par la pression correspondant à la hauteur du niveau de liquide.

4. Dispositif de régulation selon l'une des revendications 1 à 3, caractérisé en ce qu'est prévu à titre d'organe d'étranglement un registre d'étranglement (8) déplaçable dans un guidage vertical, et en ce que le déplacement horizontal, conféré à la transmission à ciseaux (19) est directement transmis, à titre de déplacement vertical, au registre d'étranglement (8).

5. Dispositif de régulation selon l'une des revendications 1 à 4, caractérisé en ce que le registre d'étranglement (8) est maintenu avec un équilibrage de poids.

6. Dispositif de régulation selon l'une des revendications 1 à 5, caractérisé en ce que le registre d'étranglement (8) est maintenu avec interposition d'un élément élastique (30).

7. Dispositif de régulation selon la revendication 6, caractérisé en ce que l'élément élastique (30) peut être soumis à une précontrainte.

8. Dispositif de régulation selon la revendication 6 ou 7, caractérisé en ce qu'est prévu comme élément "élastique (30) un ressort de pression, traversé par une broche (29) montée sur le carter (11), à l'extrémité inférieure de laquelle est disposé un écrou de broche (31), bloqué en rotation, servant d'appui pour le ressort, contre lequel prend appui, à l'extrémité supérieure, une potence (25) à laquelle le registre d'étranglement (8) est suspendu par l'intermédiaire d'une tige de registre (9).

9. Dispositif de régulation selon la revendication 8, caractérisé en ce que sur la potence (25) est fixée une tige d'actionnement (24), reliée en outre à l' extrémité menée de la transmission à ciseaux (19),

10. Dispositif de régulation selon l'une des revendications 1 à 9, caractérisé en ce que, pour provoquer une sollicitation automatique de l'organe d'étranglement, est prévu un dispositif de commande présentant les caractéristiques suivantes :
- un boîtier de pression (41),comprenant au moins une enceinte de pression (46), avec une membrane (45) exposée de part et d'autre à la pression de l'eau, pouvant être chargée d'un côté par une pression d'eau correspondant au moins à peu près à la pression d'eau hydrostatique, dans la zone des faibles vitesses d'écoulement,
- une conduite de commande (39), avec une ouverture située dans la zone des plus grandes vitesses d'écoulement, par exemple dans l'ouverture d'évacuation (3), et
- un boîtier de soupape (49), raccordé au boîtier de pression (41) et dans lequel un poussoir de soupape (48), pouvant être actionné au moyen de la membrane (45), est déplaçable, entre une position dégageant une ouverture de désaération (38) d'une chambre (37) et une position permettant l'entrée de liquide dans la chambre (37), le liquide entrant dans la chambre (37) agissant indirectement ou directement sur l'organe d'étranglement, dans le sens d'un dégagement de l'ouverture d'évacuation (3).

11. Dispositif de régulation selon la revendication 10, caractérisé en ce que le boîtier de pression (41) est composé d'un carter plat (42), délimité en face inférieure par la membrane (45) et portant en face supérieure le carter de soupape (49).

12. Dispositif de régulation selon la revendication 10 ou 11, caractérisé en ce que le poussoir de soupape (48) est fixé centralement sur une plaque de fond (47) en deux parties enfermant en elles la membrane (45).

13. Dispositif de régulation selon l'une des revendications 10 à 12, caractérisé en ce que le carter de soupape (49) est traversé en direction transversale par la conduite de désaération (38) et pourvu, à l'extrémité supérieure, d'une ouverture d'entrée (50), pour le liquide et en ce que le poussoir de soupape (48) présente un perçage (52) transversal, pouvant, en une position finale, être placé en liaison alignée par rapport à la conduite de désaération (38) et permettant, dans l'autre position finale, l'entrée de liquide dans la chambre (37).
